# EUROPÄISCHE PATENTSCHRIFT

(11) **EP 2 167 348 B1**
(45) Veröffentlichungstag und Bekanntmachung des Hinweises auf die Patenterteilung: **15.05.2013**
(21) Anmeldenummer: 08773388.7
(22) Anmeldetag: 11.06.2008
(51) Int. Cl.: B60Q 3/04, G02B 6/42

(54) **ANZEIGEVORRICHTUNG, INSBESONDERE FAHRZEUGANZEIGEVORRICHTUNG, MIT EINEM HELLIGKEITSSENSOR**
DISPLAY DEVICE, PARTICULARLY DISPLAY DEVICE FOR MOTOR VEHICLES, WITH A BRIGHTNESS SENSOR
DISPOSITIF D'AFFICHAGE, NOTAMMENT DISPOSITIF D'AFFICHAGE AUTOMOBILE, COMPORTANT UN CAPTEUR DE LUMINOSITÉ

(30) Priorität: 11.06.2007 DE 102007027353
(43) Veröffentlichungstag der Anmeldung: 31.03.2010
(73) Patentinhaber: Johnson Controls Automotive Electronics GmbH, 75196 Remchingen (DE)
(72) Erfinder: ARHEIT, Thomas, 76356 Weingarten (DE); LÖFFLER, Markus, 75196 Remchingen (DE); KAMMERER, Gerhard, 75203 Königsbach (DE); KUEHN, Detlef, 76316 Malsch (DE)
(74) Vertreter: Schwöbel, Thilo K.
(86) Internationale Anmeldenummer: PCT/EP2008/004659
(87) Internationale Veröffentlichungsnummer: WO 2008/151782

(56) Entgegenhaltungen:
- EP-A- 0 847 896
- EP-A- 1 217 598
- FR-A- 2 833 395
- US-A- 5 815 623
- US-A1- 2003 043 589
- US-A1- 2008 001 070
- US-B1- 6 369 395
- US-B1- 6 867 751

## Beschreibung

Die Erfindung betrifft eine Anzeigevorrichtung, insbesondere Fahrzeuganzeigevorrichtung, mit einem Helligkeitssensor, wobei die Anzeigevorrichtung einen eine Lichteinkoppelstelle und eine Lichtauskoppelstelle aufweisenden und zur Lichteinkoppelung in den Helligkeitssensor vorgesehenen flexiblen Lichtwellenleiter aufweist.

Solche Anzeigevorrichtungen sind allgemein bekannt. Um bei verschiedenen Anzeigegeräten wie Kombiinstrumenten oder Displays eine Helligkeitsanpassung (Dimmung) zu ermöglichen, ist es erforderlich, die Umgebungshelligkeit zu erfassen. Dies erfolgt beispielsweise mit einem Lichtsensor bzw. einem Phototransistor. Beispielsweise ist aus der deutschen Offenlegungsschrift DE 101 60 296 A1 eine Anzeigevorrichtung mit einem Lichtleiter bekannt, wobei der Lichtleiter dazu dient, einen sichere Lichtverbindung von einzelnen elektrischen Bauteilen im Inneren der Anzeigevorrichtung zu einem Gehäuseäußeren zu gewährleisten. Hierbei ist nachteilig, dass zur Befestigung des Lichtleiters ein erheblicher Aufwand vorgesehen ist. Ferner ist es hierbei nachteilig, dass ein Austausch der Frontblende der Anzeigevorrichtung meist einen Austausch des Lichtleiters bzw. der Befestigung des Lichtleiters nach sich zieht. Ferner ist aus US 6,867,751 B1 ein Verfahren und eine Vorrichtung zur Anpassung der Anzeigecharakteristik einer Anzeigeeinheit bekannt.

Aufgabe der vorliegenden Erfindung ist es, eine Anzeigevorrichtung, insbesondere eine Fahrzeuganzeigevorrichtung, mit einem Helligkeitssensor und einem flexiblen Lichtwellenleiter zu schaffen, die die Nachteile des Standes der Technik nicht aufweist und die Schaffung einer kostengünstigen und lebensdauerstabilen Anzeigevorrichtung erlaubt, die vergleichsweise einfach und damit kostengünstig herstellbar ist. Weiterhin soll die Austauschbarkeit der Frontblende der Anzeigevorrichtung gewährleistet sein, so dass eine größere Reparaturfreundlichkeit erzielt wird.

Die Aufgabe wird gelöst durch eine Anzeigevorrichtung, insbesondere Fahrzeuganzeigevorrichtung, gemäß Anspruch 1. Durch das Adapterelement im Bereich der Lichtauskoppelstelle ist es erfindungsgemäß vorteilhaft möglich, mit vergleichsweise geringem Aufwand den Lichtwellenleiter an der Anzeigevorrichtung in sicherer und dauerhafter Weise zu befestigen. Kumulativ dazu ist es erfindungsgemäß durch die Anordnung des Temperatursensors im Bereich des Helligkeitssensors ferner vorteilhaft möglich, dass auch bei großen Toleranzen hinsichtlich des Verhaltens des Lichtsensors bzw. Helligkeitssensors und insbesondere bei einer großen Temperaturabhängigkeit des Helligkeitssensors dennoch eine genaue Lichtmessung bzw. Helligkeitsbestimmung und eine entsprechend genaue Reaktion auf die vorhandene Umgebungshelligkeit der Anzeigevorrichtung möglich ist. Weiterhin ist es alternativ oder kumulativ sowohl zu dem Adapterelement als auch zum Temperatursensor durch die Positionierung der Lichtauskoppelstelle durch Eigenfederung vorteilhaft möglich, mit geringem Aufwand zu einem Ausgleich von beispielsweise temperaturbedingten Maßänderungen zu kommen und eine gute, einfache und kostengünstige Austauschbarkeit der Frontplatte bzw. Blende der Anzeigevorrichtung zu gewährleisten.

Erfindungsgemäß ist vorgesehen, dass die Anzeigevorrichtung eine Leiterplatte zur elektrischen Verbindung des Helligkeitssensors und/oder des Temperatursensors aufweist. Hierdurch ist es in vorteilhafter Weise möglich, dass der Temperatursensor und/oder der Helligkeitssensor zum einen geschützt auf der Leiterplatte angeordnet werden können und zum anderen in einfacher und vergleichsweise kostengünstiger Weise mittels der Leiterplatte elektrisch kontaktiert bzw. montiert werden können. Im Vergleich zu einem Aufbau der Anzeigevorrichtung mit einer separaten Leiterplatte im Bereich der Frontblende der Anzeigevorrichtung ergeben sich damit erhebliche Kostenvorteile und weiterhin auch Montagevorteile bzw. Vorteile hinsichtlich der Reparaturfähigkeit der Anzeigevorrichtung bzw. der einfachen Austauschbarkeit der Frontplatte oder Frontblende der Anzeigevorrichtung.

Weiterhin ist es bevorzugt, wenn das Adapterelement als ein Winkelstück vorgesehen ist bzw. wenn das Adapterelement an den Lichtwellenleiter angespritzt vorgesehen ist. Hierdurch kann herstellungstechnisch in einfacher und sicherer Weise die Verbindung bzw. Anbindung zwischen dem Lichtwellenleiter und dem Helligkeitssensor erfolgen.

Die ferner bevorzugte Maßnahme, dass der Lichtwellenleiter zwischen der Lichteinkoppelstelle und der Lichtauskoppelstelle zumindest teilweise mit lichtundurchlässigem Material ummantelt vorgesehen ist, weist den Vorteil auf, dass keine Gefahr einer unbeabsichtigten optischen Einkopplung von Licht gegeben ist; dass ferner ein solcher Lichtwellenleiter durch einen vergleichsweise kleinen Durchmesser (von beispielsweise einem Millimeter) des im Inneren des lichtundurchlässigen Materials der Ummantelung vorliegenden eigentlichen Lichtleitermaterials ein vergleichsweise kleiner Mindestbiegeradius (von beispielsweise ca. 9 Millimeter) vorgegeben ist, so dass ein solcher Lichtwellenleiter darüber hinaus auch besonders flexibel verlegbar bzw. einsetzbar ist. Eine Ausbildung des Lichtwellenleiters ohne eine Ummantelung ist jedoch erfindungsgemäß ebenfalls möglich, wobei hier vorteilhaft ist, dass sich durch einen vergleichsweise großen Durchmesser des eigentlichen Lichtleitermaterials ein sehr guter bzw. effizienter Lichttransport innerhalb des Lichtleiters ergibt.

Erfindungsgemäß ist ferner bevorzugt, dass die Lichteinkoppelstelle im Bereich der Außenseite einer Abdeckung der Anzeigevorrichtung oder im Bereich der Außenseite einer Blende der Anzeigevorrichtung vorgesehen ist bzw. dass zwischen der Lichteinkoppelstelle und der Außenseite einer Abdeckung der Anzeigevorrichtung oder einer Blende der Anzeigevorrichtung ein Lichtleiter, insbesondere eine Linse, vorgesehen ist. Hierdurch ist es erfindungsgemäß in vorteilhafter Weise möglich, dass zum einen eine gute Funktionsfähigkeit bei der Sensierung der Umgebungshelligkeit der Anzeigevorrichtung, insbesondere durch einen guten Lichtübergang vom Äußeren der Anzeigevorrichtung über die Lichteinkoppelstelle in den Lichtwellenleiter, gewährleistet ist und dass zum anderen dennoch das Äußere der Anzeigevorrichtung in besonderer Weise ästhetischen Ansprüchen genügt.

Weiterhin ist es erfindungsgemäß bevorzugt, wenn im Bereich der Innenseite einer Abdeckung der Anzeigevorrichtung oder im Bereich der Innenseite einer Blende der Anzeigevorrichtung eine Einführhilfe für die Lichteinkoppelstelle des Lichtwellenleiters vorgesehen ist, wobei die Einführhilfe bevorzugt trichterförmig ausgebildet ist. Hierdurch kann in besonders einfacher Weise die Montage der Anzeigevorrichtung durchgeführt werden und es ist weiterhin möglich, dass die Blende bzw. die Abdeckung der Anzeigevorrichtung in besonders einfacher Weise austauschbar gestaltet ist.

Ausführungsbeispiele der Erfindung sind in der Zeichnung dargestellt und in der nachfolgenden Beschreibung näher erläutert.
- Figuren 1 und 2: zeigen zwei Ausführungsformen eines in einer erfindungsgemäßen Anzeigevorrichtung verwendeten Lichtwellenleiters.
- Figuren 3 bis 6: zeigen mittels Explosionsdarstellungen verschiedene Ausführungsformen des grundsätzlichen Aufbaus der Lichtleitung vom Äußeren der Blende bzw. der Abdeckung einer erfindungsgemäßen Anzeigevorrichtung bis zu einem Helligkeitssensor.
- Figuren 7 bis 11: zeigen Detaildarstellungen verschiedener Ausführungsformen des Aufbaus der erfindungsgemäßen Anzeigevorrichtung im Bereich der Lichtauskoppelstelle bzw. im Bereich der Lichteinkoppelstelle.
- Figuren 12 und 13: zeigen eine Explosionsdarstellung und eine perspektivische Ansicht einer Ausführungsform der erfindungsgemäßen Anzeigevorrichtung.

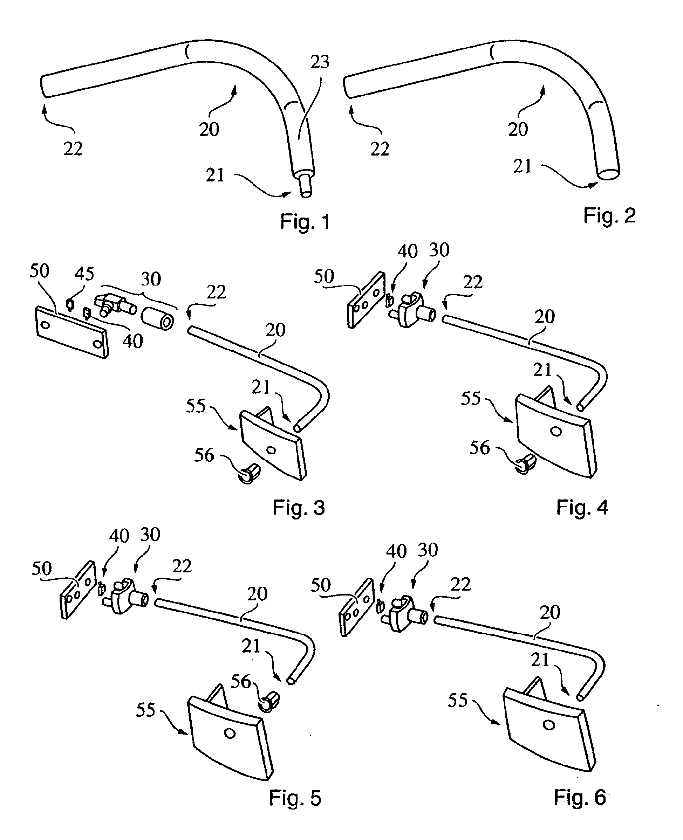

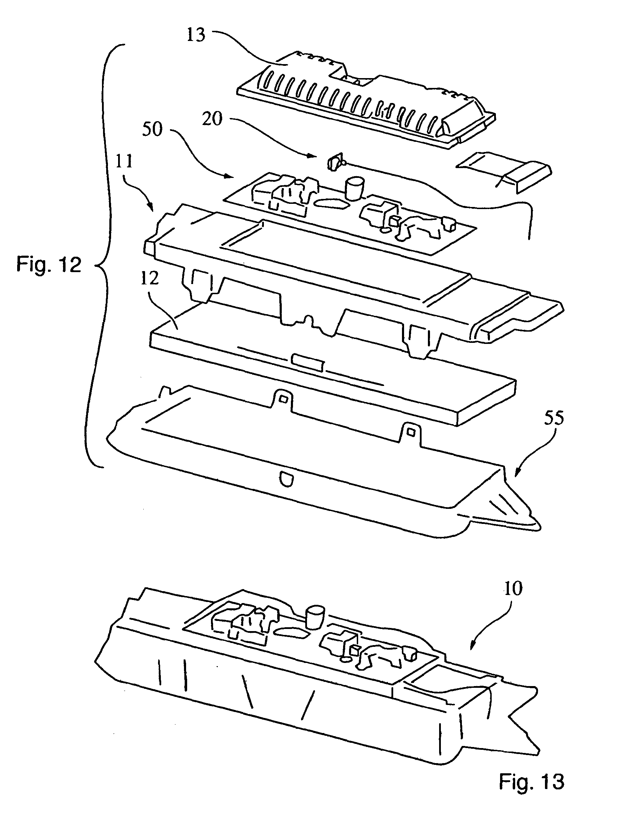

In den Figuren 1 und 2 ist jeweils ein Lichtwellenleiter 20 zur Verwendung in einer in der Figur 12 in einer perspektivischen Explosionsdarstellung und in Figur 13 in einer perspektivischen Darstellung gezeigten Anzeigevorrichtung 10 dargestellt. Bei der Anzeigevorrichtung 10 kann es sich erfindungsgemäß beispielsweise um ein Kombinationsinstrument - insbesondere in einem Kraftfahrzeug, Luftfahrzeug, Wasserfahrzeug oder dergleichen - handeln oder auch um eine sonstige Anzeigevorrichtung, beispielsweise in einer Mittelkonsole eines Fahrzeugs. Die Anzeigevorrichtung 10 weist hierbei gemäß dem Ausführungsbeispiel der Figur 12 den Lichtwellenleiter 20 und eine (äußere) Blende 55 bzw. eine (äußere) Abdeckung 55 sowie insbesondere eine Leiterplatte 50, ein Trägerelement 11, ein Anzeigeelement 12 und eine Rückteil 13 auf. Der Lichtwellenleiter 20 weist sowohl gemäß der Figur 1 als auch gemäß der Figur 2 eine Lichteinkoppelstelle 21 und eine Lichtauskoppelstelle 22 auf. Der Lichtwellenleiter 20 ist erfindungsgemäß als flexibler Lichtwellenleiter 20 vorgesehen und wird im Folgenden auch als sogenannter Flexleiter 20 bezeichnet. Im Gegensatz zum Ausführungsbeispiel des Flexleiters 20 gemäß der Figur 2 ist der Flexleiter 20 gemäß der Figur 1 mittels einer Ummantelung 23 zumindest in Teilbereichen zwischen der Lichteinkoppelstelle 21 und der Lichtauskoppelstelle 22 ummantelt vorgesehen.

Wie aus den Figuren 3 bis 7 hervorgeht, ist die Lichteinkoppelstelle 21 im in die Anzeigevorrichtung 10 eingebauten Zustand bevorzugt im Bereich der Blende 55 bzw. der Abdeckung 55 vorgesehen. Im Bereich der Lichteinkoppelstelle 21 ist ferner eine nicht mittels eines Bezugszeichen dargestellte Öffnung in der Blende 55 bzw. der Abdeckung 55 sowie in den Ausführungsformen gemäß den Figuren 3 bis 5 ein Lichtleiter 56 in Form einer Linse vorgesehen. In der Ausführungsform gemäß der Figur 6 ist die Lichteinkoppelstelle 21 durch die Öffnung in der Blende 55 bzw. der Abdeckung 55 gesteckt vorgesehen. Die Lichtauskoppelstelle 22 ist im in die Anzeigevorrichtung 10 eingebauten Zustand bevorzugt im Bereich der Leiterplatte 50 vorgesehen. Im Bereich der Lichtauskoppelstelle 22 ist ferner ein Helligkeitssensor 40, ein Adapterelement 30 und ggf. ein Temperatursensor 45 (lediglich in Figur 3 abgebildet, jedoch grundsätzlich auch bei den Ausführungsformen gemäß den Figuren 4 bis 6 möglich) vorgesehen. Das Adapterelement 30 ist in der Ausführungsform gemäß der Figur 3 als Winkelstück mit einem Adapter vorgesehen und in der Ausführungsform gemäß den Figuren 4 bis 6 als Adaptergehäuse vorgesehen. In beiden Fällen kann das Adapterelement 30 mittels eines Kunststoffspritzgussverfahrens an den Flexleiter 20 im Bereich der Lichtauskoppelstelle 22 angespritzt vorgesehen sein.

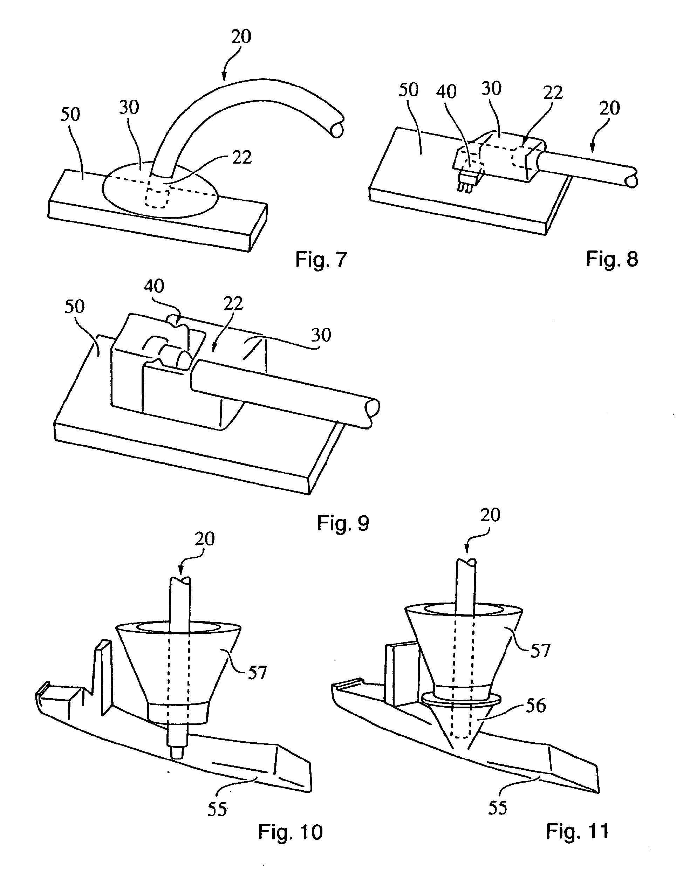

In den Figuren 7 bis 9 sind Detaildarstellungen dreier Ausführungsformen des Aufbaus der erfindungsgemäßen Anzeigevorrichtung 10 im Bereich der Lichtauskoppelstelle 22 dargestellt. Hierbei ist bei der Ausführungsform gemäß der Figur 7 das Adapterelement 30 in Form eines Adaptergehäuses an den Flexleiter 20 angespritzt vorgesehen und die Montage dieser Anordnung erfolgt hierbei bevorzugt mittels Einpressen des Adaptergehäuses in die Leiterplatte 50. Alternativ hierzu kann es auch vorgesehen sein, dass das Adaptergehäuse in die Leiterplatte 50 eingepresst wird und dass der Flexleiter 20 in das Adaptergehäuse gesteckt wird, wobei die Haltekraft für den Flexleiter 20 durch Klemmen im Adaptergehäuse oder durch Niederhalten durch das Rückteil 13 (vgl. Figur 12) erfolgt. Bei der Ausführungsform gemäß der Figur 8 ist das Adapterelement 30 in Form eines Winkelstücks an den Flexleiter 20 angespritzt vorgesehen und die Montage dieser Anordnung erfolgt bevorzugt mittels Einpressen in die Leiterplatte 50, alternativ hierzu mittels einer Verbindung des Winkelstücks mit dem Flexleiter 20 über einen Adapter sowie Einpressen dieser Anordnung in die Leiterplatte 50, so dass ein solcher Adapter zusammen mit dem Winkelstück das Adapterelement 30 darstellt. Bei der Ausführungsform gemäß der Figur 9 ist das Adapterelement 30 derart vorgesehen, dass sowohl der Helligkeitssensor 40 (insbesondere als bedrahteter Helligkeitssensor) als auch der Flexleiter 20 mit dem Kunststoffgehäuse des Adapterelements 30 umspritzt ist, wobei die Montage auf der Leiterplatte beispielsweise mittels Löten erfolgt. In dieser oder einer ähnlichen Ausführungsform ist es erfindungsgemäß möglich, den Helligkeitssensor 40 als seitlich abstrahlende sogenannte "side-LED" auszubilden. Alternativ zur Umspritzung sowohl des Flexleiters 20 als auch des Helligkeitssensors 40 kann es auch vorgesehen sein, dass lediglich der Flexleiter 20 oder der Helligkeitssensor 40 oder keiner von beiden umspritzt vorgesehen ist und dass eine Verbindung mittels Clipsverbindung vorgesehen ist, beispielsweise der Flexleiter 20 in das Adaptergehäuse des Adapterelements 30 eingeclipst wird und/oder das Adapterelement 30 mit einem Gehäuse des Helligkeitssensors 30 verclipst wird. In den Figuren 10 und 11 sind Detaildarstellungen zweier Ausführungsformen des Aufbaus der erfindungsgemäßen Anzeigevorrichtung 10 im Bereich der Lichteinkoppelstelle 21 dargestellt, wobei gemäß der Ausführungsform nach Figur 10 der Flexleiter 20 direkt in der Abdeckung 55 bzw. der Blende 55 mittels einer Einführhilfe 57 positioniert vorgesehen ist und wobei gemäß der Ausführungsform nach Figur 11 der Flexleiter 20 über einen insbesondere linsenförmigen Lichtleiter 56 in der Abdeckung 55 bzw. der Blende 55 der Anzeigevorrichtung 10 mittels ebenfalls einer Einführhilfe 57 positioniert vorgesehen ist. Insbesondere ist es sowohl bei der Ausführungsform gemäß der Figur 10 als auch bei der Ausführungsform gemäß der Figur 11 vorgesehen, dass der Flexleiter 20 durch Eigenfederung - beispielsweise erzeugt durch eine Biegung - gegen die Abdeckung 55 oder gegen den Lichtleiter 56 gedrückt wird.

### Bezugszeichenliste

| | |
|---|---|
| 10 | Anzeigevorrichtung |
| 11 | Trägerelement |
| 12 | Anzeigeelement |
| 13 | Rückteil |
| 20 | Lichtwellenleiter |
| 21 | Einkoppelstelle |
| 22 | Auskoppelstelle |
| 23 | lichtundurchlässiges Material |
| 30 | Adapterelement |
| 40 | Helligkeitssensor |
| 45 | Temperatursensor |
| 50 | Leiterplatte |
| 55 | Abdeckung der Anzeigevorrichtung / Blende der Anzeigevorrichtung |
| 56 | Lichtleiter |
| 57 | Einführhilfe |

## Patentansprüche

1. Anzeigevorrichtung (10), insbesondere Fahrzeuganzeigevorrichtung, mit einem Helligkeitssensor (40), wobei die Anzeigevorrichtung (10) einen eine Lichteinkoppelstelle (21) und eine Lichtauskoppelstelle (22) aufweisenden und zur Lichteinkoppelung in den Helligkeitssensor (40) vorgesehenen flexiblen Lichtwellenleiter (20) aufweist, wobei im Bereich der Lichtauskoppelstelle (22) und des Helligkeitssensors (40) ein Adapterelement vorgesehen ist, **dadurch gekennzeichnet, dass** die Anzeigevorrichtung (10) einen Temperatursensor (45) im Bereich des Helligkeitssensors (40) aufweist, wobei der Helligkeitssensor (40) und der Temperatursensor (45) auf einer Leiterplatte (50) angeordnet sind, wobei das Adapterelement (30) auf die Leiterplatte (50) montiert ist, wobei das Adapterelement (30) an den Lichtwellenleiter (20) angespritzt ist.

2. Anzeigevorrichtung (10) nach Anspruch 1, **dadurch gekennzeichnet, dass** die Lichteinkoppelstelle (21) des Lichtwellenleiters (20) durch Eigenfederung in ihrer Montageposition gehalten vorgesehen ist.

3. Anzeigevorrichtung (10) nach einem der vorhergehenden Ansprüche, **dadurch gekennzeichnet, dass** die Anzeigevorrichtung (10) die Leiterplatte (50) zur elektrischen Verbindung des Helligkeitssensors (40) und/oder des Temperatursensors (45) aufweist.

4. Anzeigevorrichtung (10) nach einem der vorhergehenden Ansprüche, **dadurch gekennzeichnet, dass** das Adapterelement (30) als ein Winkelstück vorgesehen ist.

5. Anzeigevorrichtung (10) nach einem der vorhergehenden Ansprüche, **dadurch gekennzeichnet, dass** der Lichtwellenleiter (20) zwischen der Lichteinkoppelstelle (21) und der Lichtauskoppelstelle (22) zumindest teilweise mit lichtundurchlässigem Material (23) ummantelt vorgesehen ist.

6. Anzeigevorrichtung (10) nach einem der vorhergehenden Ansprüche, **dadurch gekennzeichnet, dass** die Lichteinkoppelstelle (21) im Bereich der Außenseite einer Abdeckung (55) der Anzeigevorrichtung (10) oder im Bereich der Außenseite einer Blende der Anzeigevorrichtung (10) vorgesehen ist.

7. Anzeigevorrichtung (10) nach einem der vorhergehenden Ansprüche, **dadurch gekennzeichnet, dass** zwischen der Lichteinkoppelstelle (21) und der Außenseite einer Abdeckung (55) der Anzeigevorrichtung (10) oder einer Blende der Anzeigevorrichtung (10) ein Lichtleiter (56), insbesondere eine Linse, vorgesehen ist.

8. Anzeigevorrichtung (10) nach einem der vorhergehenden Ansprüche, **dadurch gekennzeichnet, dass** im Bereich der Innenseite einer Abdeckung (55) der Anzeigevorrichtung (10) oder im Bereich der Innenseite einer Blende der Anzeigevorrichtung (10) eine Einführhilfe (57) für die Lichteinkoppelstelle (21) des Lichtwellenleiters (20) vorgesehen ist, wobei die Einführhilfe (57) bevorzugt trichterförmig ausgebildet ist.

## Claims

1. Display device (10), particularly a vehicle display device, with a brightness sensor (40), the display device (10) having a flexible fiber-optic cable (20) that has a light input point (21) and a light output point (22) and is provided for inputting light into the brightness sensor (40), an adaptor element being provided in the region of the light output point (22) and of the brightness sensor (40), **characterized in that** the display device (10) has a temperature sensor (45) in the region of the brightness sensor (40), the brightness sensor (40) and the temperature sensor (45) being arranged on a printed circuit board (50), the adaptor element (30) being mounted on the printed circuit board (50), the adaptor element (30) being integrally extruded onto the fiber-optic cable (20).

2. Display device (10) according to Claim 1, **characterized in that** the light input point (21) of the fiber-optic cable (20) is provided in a fashion held in its mounted position by intrinsic resilience.

3. Display device (10) according to one of the preceding claims, **characterized in that** the display device (10) has a printed circuit board (50) for the electrical connection of the brightness sensor (40) and/or of the temperature sensor (45).

4. Display device (10) according to one of the preceding claims, **characterized in that** the adaptor element (30) is provided as an angled piece.

5. Display device (10) according to one of the preceding claims, **characterized in that** the fiber-optic cable (20) is provided in a fashion coated at least partially with a light-opaque material (23) between the light input point (21) and the light output point (22).

6. Display device (10) according to one of the preceding claims, **characterized in that** the light input point (21) is provided in the region of the outside of a cover (55) of the display device (10), or in the region of the outside of a panel of the display device (10).

7. Display device (10) according to one of the preceding claims, **characterized in that** an optical conductor (56), in particular a lens, is provided between the light input point (21) and the outside of a cover (55) of the display device (10) or a panel of the display device (10).

8. Display device (10) according to one of the preceding claims, **characterized in that** an insertion aid (57) for the light input point (21) of the fiber-optic cable (20) is provided in the region of the inside of a cover (55) of the display device (10) or in the region of the inside of a panel of the display device (10), the insertion aid (57) preferably being of funnel-shaped design.

## Revendications

1. Dispositif d'affichage (10), en particulier dispositif d'affichage de véhicule, comprenant un capteur de luminosité (40), le dispositif d'affichage (10) présentant un guide d'onde optique (20) flexible présentant un point de couplage de la lumière (21) et un point de découplage de la lumière (22) et prévu pour le couplage de la lumière dans le capteur de luminosité (40), un élément adaptateur étant prévu dans la région du point de découplage de la lumière (22) et du capteur de luminosité (40), **caractérisé en ce que** le dispositif d'affichage (10) présente un capteur de température (45) dans la région du capteur de luminosité (40), le capteur de luminosité (40) et le capteur de température (45) étant disposés sur une carte à circuits imprimés (50), l'élément adaptateur (30) étant monté sur la carte à circuits imprimés (50), l'élément adaptateur (30) étant surmoulé sur le guide d'onde optique (20).

2. Dispositif d'affichage (10) selon la revendication 1, **caractérisé en ce que** le point de couplage de la lumière (21) du guide d'onde optique (20) est prévu de manière à être retenu dans sa position de montage par sa propre contrainte à ressort.

3. Dispositif d'affichage (10) selon l'une quelconque des revendications précédentes, **caractérisé en ce que** le dispositif d'affichage (10) présente la carte à circuits imprimés (50) pour la liaison électrique du capteur de luminosité (40) et/ou du capteur de température (45).

4. Dispositif d'affichage (10) selon l'une quelconque des revendications précédentes, **caractérisé en ce que** l'élément adaptateur (30) est prévu sous forme de pièce angulaire.

5. Dispositif d'affichage (10) selon l'une quelconque des revendications précédentes, **caractérisé en ce que** le guide d'onde optique (20) est prévu entre le point de couplage de la lumière (21) et le point de découplage de la lumière (22) de manière enveloppée au moins en partie avec un matériau opaque à la lumière (23).

6. Dispositif d'affichage (10) selon l'une quelconque des revendications précédentes, **caractérisé en ce que** le point de couplage de la lumière (21) est prévu dans la région du côté extérieur d'un recouvrement (55) du dispositif d'affichage (10) ou dans la région du côté extérieur d'un obturateur du dispositif d'affichage (10).

7. Dispositif d'affichage (10) selon l'une quelconque des revendications précédentes, **caractérisé en ce qu'**entre le point de couplage de la lumière (21) et le côté extérieur d'un recouvrement (55) du dispositif d'affichage (10) ou d'un obturateur du dispositif d'affichage (10) est prévu un guide de lumière (56), en particulier une lentille.

8. Dispositif d'affichage (10) selon l'une quelconque des revendications précédentes, **caractérisé en ce que** dans la région du côté intérieur d'un recouvrement (55) du dispositif d'affichage (10) ou dans la région du côté intérieur d'un obturateur du dispositif d'affichage (10) est prévu un auxiliaire d'insertion (57) pour le point de couplage de la lumière (21) du guide d'onde optique (20), l'auxiliaire d'insertion (57) étant réalisé de préférence sous forme d'entonnoir.
